# EUROPEAN PATENT SPECIFICATION

(11) **EP 3 852 882 B1**
(45) Date of publication and mention of the grant of the patent: **03.05.2023**
(21) Application number: 19862967.7
(22) Date of filing: 30.05.2019
(51) Int. Cl.: A62C 35/68, F16L 3/10, F16L 3/24

(54) **OPENABLE AND CLOSABLE CLAMP SPRINKLER BRACKET**
ÖFFNUNGS- UND VERSCHLIESSBARE KLEMMENSPRINKLERHALTERUNG
SUPPORT D'EXTINCTEUR À COLLIERS DE SERRAGE POUVANT S'OUVRIR ET SE FERMER

(30) Priority: 19.09.2018 TR 201813422
(43) Date of publication of application: 28.07.2021
(73) Proprietor: Haci Ayvaz Endüstriyel Mamüller Sanayi ve Ticaret Anonim Sirketi, Beyoglu/Istanbul (TR)
(72) Inventor: AYVAZ, Ohannes, Istanbul (TR)
(74) Representative: Yamankaradeniz, Kemal
(86) International application number: PCT/TR2019/050403
(87) International publication number: WO 2020/060510

(56) References cited:
- KR-B1- 101 891 500
- KR-Y1- 200 440 808
- US-A- 4 272 871
- US-A1- 2013 048 822
- US-A1- 2015 360 064
- US-A1- 2016 296 778
- US-A1- 2018 259 094
- US-A1- 2018 259 094

## Description

### Technical Field

The present invention is related to sprinkler systems which are used for extinguishing fires by detecting the smoke being diffused from the fires that occur in closed and open areas and spraying water.

The present invention is particularly related to a clamp sprinkler bracket which enables the sprinkler sleeve to be easily located and fixed into the sleeve slot which is formed between these two clamps due to the fact that the bottom clamp and the corresponding top clamp have a structure that is able to both open and close.

### Prior Art

Today, in order to extinguish fires that occur in open or closed areas, sprinkler systems, i.e. nozzle systems, which sprays water or foam are used. In closed areas, this system is composed of sprinklers that is located to the fixating profiles which are formed on the ceiling and hoses that are connected to these. The respective hoses are connected to the water or foam tube / tank, which is used in order to extinguish the fire, so that the water or foam inside the tube or tank is sprayed onto the fire. The spraying is performed by the sprinkler.

In the prior art, the whole structure is fixated onto the ceiling by fixating the sprinkler sleeve, which connects the sprinkler and the hose, onto the profile.

In the known state of the art, the clamp part of the apparatus, onto which the sprinkler sleeve is being fixated, has a circular uniform. Therefore, the sprinkler sleeve goes through the clamp and is fixated by screwing on the back. Thus, the sprinkler sleeve is needed to be lifted upwards to the extent that it is possible for it to go through the hole on the apparatus and then the sprinkler sleeve goes through the bracket which has a circular form. For this reason, performing this step may create some difficulties in ceiling systems wherein it is narrow and it does not have sufficient amount of space upwards.

In the sprinkler systems that are used in the known state of the art, the time that is needed for mounting is long because the hose needs to be inserted into the bracket from above. This, in turn, results in an increase in the costs of labor.

In the prior art, fixating the sprinkler sleeve inside the clamp body is performed by leaning on the profile. This endangers the durableness of the structure.

In prior art, the fixation of the sprinkler sleeve after it leans onto the profile is performed by only one screw. In this system, in case the screw loosens, the sprinkler sleeve is displaced.

In the patent research that is performed regarding the prior art, the document from USA with number US8833719 is found. In this document, the part of the sprinkler sleeve is produced in an openable and closable structure, however, a system with screws is used to achieve this. This system results in long periods of time spent in screwing and unscrewing steps.

Another patent is a USA application with number US20160279455A1. In this application, the openable and closable system is developed, however, again, a system with screws is used. Here, the time needed in order for the screw to be screwed and unscrewed increases the labor force and does not provide an ease in use.

Another application that shall be mentioned is the patent application with number US20150060613A1. In this application, the fixation of the sprinkler sleeve is achieved by performing a screwing step on the component which is used for connecting the sprinkler sleeve to the profile. However, this structure loosens over time in long term use and requires maintenance.

US20150360064A1 relates to a fixing bracket of a reducer for a sprinkler, and more particularly, to a fixing bracket of a reducer for a sprinkler, in which the reducer for the sprinkler is capable of being stably fixed and the fixing bracket is capable of being conveniently and easily attached to or detached from the reducer.

US20180259094A1 relates generally to a bracket for fixing a reducer in a fire sprinkler. More particularly, the present invention relates to a bracket for fixing a reducer in a fire sprinkler, which is configured such that the reducer is fixed by a one-touch fixing mechanism such as a hook, and a wing capable of increasing a contact area with the reducer is provided, thereby stably fixing the reducer.

US4272871A seeks to reduce this expense and to create a device comprising two identical shell halves.

As a result of the literature search that is mentioned above, the patent application with Turkey origin, which is below, is also found. This application is a utility model with application number TR2007/05025 and title "Bina içi yangin söndürme tesisatlanna mahsus hareketli sprinkler sistemi (A movable sprinkler system specifically for indoor fire extinguishing systems)". In the abstract of the application, which has a classification class of A62C 37/08, it is stated that: "Our invention is a sprinkler hose system, which is used in indoor fire extinguishing systems, and which serves the purpose of possible fires occurring indoors; wherein the metal end of the flexible hose, which is connected to the main pipe via the main pipe connection end, is fixate to the movable sliding part. The movable sliding part is located into the hole on the ceiling in an appropriate position, by moving along the movement axis plate and the metal end and the sprinkling end being located perfectly into the hole in the ceiling and so that there is not any openings of holes on the ceiling. In addition, in these systems; by using movement axis plate and flexible hose, it is enabled that the movable sliding part enables the fire extinguishing system continue operating in case of a quake or an earthquake and it absorbs the vibration that is formed during the incident. The system is composed of a main pipe, a main pipe connection end, a flexible hose, a metal end, a movable sliding part, a movement axis plate, a part for fixating to the ceiling and a sprinkling end.".

In this application, a component with a cavernous in the middle is used in order to fixate the sprinkler sleeve onto the profile. Due to the fact that this component does not have a structure that can open and close, the sprinkler sleeve is always needed to be inserted and removed from above and this, in turn, causes a high difficulty in the workmanship. Therefore, this application can be shown as an example of the disadvantages that are mentioned above.

In order for the sprinkler hose, which is mentioned above, to be connected to the profile, it needs to be attached from the top part of the bracket. In addition to that, the tightening step which is performed after the attachment of the hose, compresses the sprinkler sleeve between the profile and the apparatus and it results in an inefficient fixation. Therefore, this application can be shown as an example of the disadvantages that are mentioned above.

As a result; developments parallel to the developed technology of clamp sprinkler bracket are required and novel structures, which shall eliminate the disadvantages described above and provide solutions to the existing systems are needed.

### The Aim of the Invention

The invention, as distinct from the structures used in the prior art, is related to a clamp sprinkler bracket which is developed in order to solve the said disadvantages and which provides some additional advantages.

The aim of the invention is to enable that the sprinkler sleeve can be attached directly from the front direction, because it has an openable and closable structure due to the use of bottom and top clamps. Therefore, it can be attached to the bracket without needing to lift the sprinkler upwards.

Another aim of the invention is to provide a rapid locking which is performed only manually without requiring any key or screwdriver, due to the locking shaft which is designed specially. This provides a great amount of ease to the person performing the installation during the mounting.

Another aim of the invention is to decrease the amount of labor that is needed for mounting the sprinkler sleeve, due to the fact that it can be located from the front side.

Another aim of the invention is to strengthen the fixation of the sprinkler sleeve, due to the sleeve slot which has the same geometrical structure as the geometrical structure of the sprinkler sleeve. Another aim of the invention is to strengthen the fixation of the bracket on the profile, without requiring the profile and the coupling to be contact during the fixation, by the virtue of the fact that the profile slot and the sleeve slot are positioned in different locations.

The structural and characteristical properties of the invention, along with its all advantages, shall be understood in a clear manner by the figures provided below and the detailed description with reference to these accompanied figures and therefore; an evaluation shall be made by taking these figures and the detailed description into the account.

### Brief Description of the Figures

- **Figure -1;**: Illustrates a perspective view of the clamp sprinkler bracket of the invention in a closed manner.
- **Figure - 2;**: Illustrates a perspective view of the clamp sprinkler bracket of the invention in an open manner.
- **Figure - 3;**: Illustrates a perspective view of the clamp sprinkler bracket of the invention onto which the profile and the coupling are attached.

**Description of the Part References**

| | | | |
|---|---|---|---|
| **1.** | Clamp sprinkler bracket | **32.** | Shaft ring |
| **10.** | Bottom clamp | **40.** | Fixation element |
| **11.** | Profile slot | **50.** | Sleeve slot |
| **20.** | Top clamp | **51.** | Clamp sleeve gaps |
| **21.** | Locking shaft slot | **P.** | Profile |
| **30.** | Locking shaft | **S.** | Sprinkler sleeve |
| **31.** | Holding arm | | |

### Detailed Description of an Example of the Invention

### The structure principle;

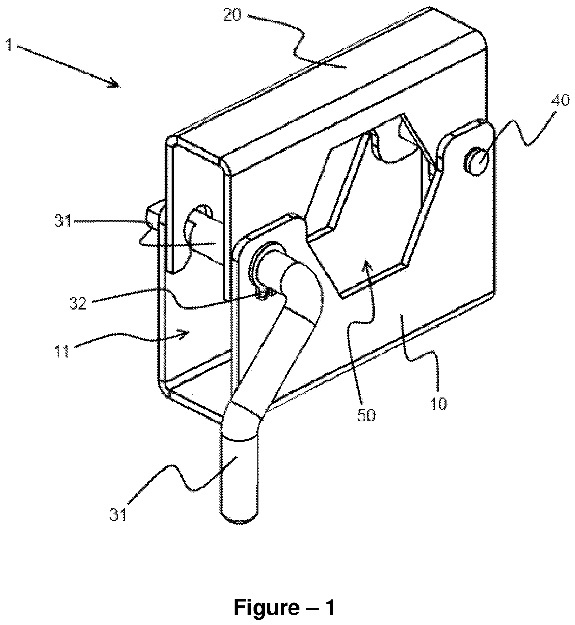

The said clamp sprinkler bracket (1) is composed of two main parts: the bottom clamp (10) and the top clamp (20). The bottom clamp (10) is a clamp group that enables the profile (P) and the Sprinkler sleeve (S) to be fixated and remain together. On the other hand, the top clamp (20) is a clamp group that is closed onto the bottom clamp (10) and which locks the Sprinkler sleeve (S) inside it. Figure 1 is a perspective view of the bottom clamp (10) and the top clamp (20) where they are attached to each other.

After the mounting of the bottom clamp (10) and the top clamp (20) each other, a sleeve slot (50) is formed in the middle of them. The said sleeve slot (50) is formed by the clamp sleeve gaps (51), which are formed inwards in the middle parts of the bottom clamp (10) and the top clamp (20), being located facing each other.

The connection of the bottom clamp (10) and the top clamp (20) is performed by the locking shaft (30) and the fixation element (40) from two different locations. The fixation element (40) fixates the two part to each other and a rotation is performed by taking this point as center.

The locking shaft (30) is the element that enables the fixation of the top clamp (20), after it is closed onto the bottom clamp (10). A holding arm (31) is formed by bending the remaining part of the locking shaft (30) which is out of the bottom clamp (10). The holding arm (31) is the part which helps to the locking shaft (30) to rotate around its own axis by 90°, to perform the locking step. A shaft ring (32), which helps to the locking step after the rotation, is located in the parts on which the said locking shaft (30) where contacts the bottom clamp (10).

In the end part of the top clamp (20), a locking shaft slot (21) which shall be inserted through the locking shaft (30) during placing the top clamp (20) onto the bottom clamp (10) is positioned.

### Mounting and the operation principle;

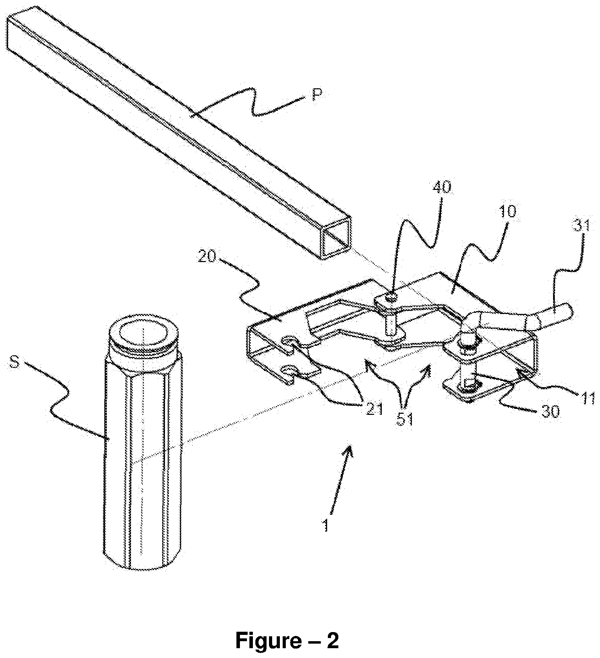

Figure 2 shows the clamp sprinkler bracket (1) in an open position and the positions of the profile (P) and the Sprinkler sleeve (S) before being located.

Firstly, the profile (P), which shall be formed on the ceiling onto which the sprinkler hose is going to be attached, is inserted to the profile slot (11) which has a bottom clamp (10). Afterwards, the bottom clamp (10) and the top clamp (20) are fixated onto each other by the fixation element (40). With the fixation, the bottom clamp (10) compresses the profile (P) and enables a strengthened connection. This point of fixation serves as a joint and enables the top clamp (20) to be rotated.

In the position that is shown in Figure, the Sprinkler sleeve (S), which is located at the end part of the sprinkler hose, is placed in a vertical position into the sleeve slot (50) of the clamp sprinkler bracket (1). After the placing step, the top clamp (20) is rotated by the virtue of the joint of the fixation element (40) and is closed onto the bottom clamp (10). When closed, the Sprinkler sleeve (S) is compressed into the sleeve slot (50), which is clearly seen in Figure 1.

During the said closing step, the locking shaft slot (21) which is formed on the top clamp (20) goes through the locking shaft (30) and the connection is achieved. In this position, the holding arm (31) which is the outer part of the locking shaft (30) is parallel to the profile (P). In case that the holding arm (31) is parallel to the profile (P), it means that the locking is not performed completely. The holding arm (31) is rotated by 90 degrees with respect to the profile (P) and a complete locking is achieved.

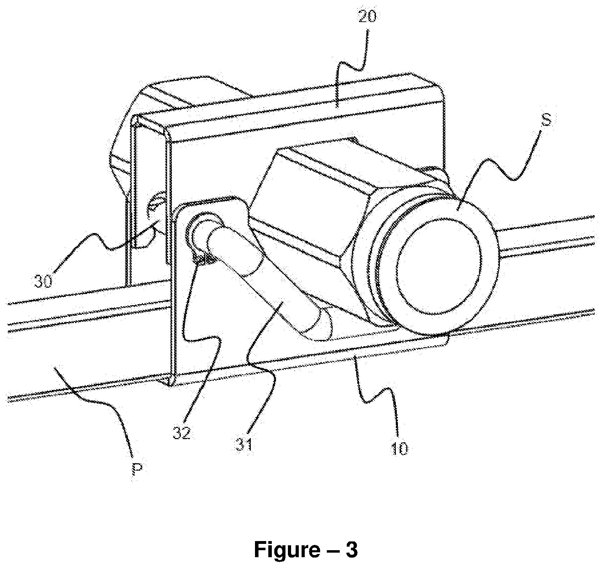

Figure 3 shows the profile (P) and the Sprinkler sleeve (S) being inserted to the clamp sprinkler bracket (1 ) and being fixated here.

When it is desired to demount the system, the holding arm (31) is rotated by 90 degrees so that it becomes parallel to the profile (P) and the lock is opened. After this step, the top clamp (20) is drawn upwards manually and the locking shaft slot (21) sets free from the locking shaft (30). With this step, the Sprinkler sleeve (S) is removed from the sleeve slot (50).

## Claims

1. A clamp sprinkler bracket (1), which enables the fixation of the Sprinkler sleeve (S), which is the end part of the sprinkler hose in the sprinkler systems that are used as fire extinguishing systems, onto the profiles (P) formed on the ceiling, **comprising;**
• A bottom clamp (10) which constitutes the general structure of the said clamp sprinkler bracket (1) and which, when installed, is fixated by being connected to the profile (P),
• A profile slot (11), into which the said profile (P) is inserted in the said bottom clamp (10),
• A top clamp (20), which is used as the corresponding part of the said bottom clamp (10) and which also constitutes the general structure of the said clamp sprinkler bracket (1),
• A sleeve slot (50), which is formed in the middle of the bottom clamp (10) and the top clamp (20) when they are superimposed to each other and into which, when installed, the Sprinkler sleeve (S) is placed,
• Clamp sleeve gaps (51), which are formed on the bottom clamp (10) and the top clamp (20) and which enable the said sleeve slot (50) to be formed,
• A fixation element (40) which fixates the said bottom clamp (10) and the said top clamp (20 ) to each other and by this way enables the top clamp (20 ) to use this fixation point as a joint and so that the top clamp (20) can be opened and closed,
• A locking shaft (30) which enables the locking when the top clamp (20) is rotated by using the said fixation element (40) as a joint and is closed onto the bottom clamp (10), **characterized in that** it comprises
• A holding arm (31) which is the extension of the locking shaft (30) towards the out of the bottom clamp (10) and which enables to the locking step to be performed by the locking shaft (30) is rotated on own axis.

2. A clamp sprinkler bracket (1) according to Claim 1, **characterized by comprising;** a locking shaft slot (21) where the said top clamp (20) is connected to the said locking shaft (30).

3. A clamp sprinkler bracket (1) according to Claim 1, **characterized by comprising;** a shaft ring (32), which prevents the unintended removal of the said locking shaft (30) from the bottom clamp (10), after said locking shaft (30) is inserted to the bottom clamp (10).

## Patentansprüche

1. Klemmensprinklerhalterung (1), die die Befestigung der Sprinklerhülse (S), die das Endstück des Sprinklerschlauchs in Sprinkleranlagen ist, die als Feuerlöschanlagen verwendet werden, an den Profilen (P) ermöglicht, die an der Decke ausgebildet sind,
**umfassend;**
• Eine untere Klemme (10), die die allgemeine Struktur der Klemmensprinklerhalterung (1) darstellt und die im eingebauten Zustand befestigt wird, indem sie mit dem Profil (P) verbunden wird,
• Einen Profilschlitz (11), in den das Profil (P) in die untere Klemme (10) eingesetzt wird,
• Eine obere Klemme (20), die als zugehöriges Teil der unteren Klemme (10) verwendet wird und die auch die allgemeine Struktur der Klemmensprinklerhalterung (1) darstellt,
• Einen Hülsenschlitz (50), der in der Mitte der unteren Klemme (10) und der oberen Klemme (20) ausgebildet ist, wenn sie übereinandergelegt sind, und in den im eingebauten Zustand die Sprinklerhülse (S) platziert ist,
• Klemmenhülsenspalten (51), die an der unteren Klemme (10) und der oberen Klemme (20) ausgebildet sind und die Ausbildung des Hülsenschlitzes (50) ermöglichen,
• Ein Befestigungselement (40), das die untere Klemme (10) und die obere Klemme (20) aneinander befestigt und auf diese Weise ermöglicht, dass die obere Klemme (20) diesen Befestigungspunkt als Gelenk verwendet und sodass die obere Klemme (20) geöffnet und geschlossen werden kann,
• Einen Sicherungsstab (30), der das Sichern ermöglicht, wenn die obere Klemme (20) gedreht wird, indem das Befestigungselement (40) als Gelenk verwendet wird, und auf die untere Klemme (10) geschlossen wird, **dadurch gekennzeichnet, dass** sie umfasst,
• Einen Haltearm (31), der die Verlängerung des Sicherungsstabs (30) zum Äußeren der unteren Klemme (10) ist und ermöglicht, dass der Sicherungsschritt durchgeführt wird, indem der Sicherungsstab (30) um seine eigene Achse gedreht wird.

2. Klemmensprinklerhalterung (1) nach Anspruch 1, **dadurch gekennzeichnet, dass sie umfasst;** einen Sicherungsstabschlitz (21), in dem die obere Klemme (20) mit dem Sicherungsstab (30) verbunden ist.

3. Klemmensprinklerhalterung (1) nach Anspruch 1, **dadurch gekennzeichnet, dass sie umfasst;** einen Stabring (32), der das unbeabsichtigte Entfernen des Sicherungsstabs (30) aus der unteren Klemme (10) verhindert, nachdem der Sicherungsstab (30) in die untere Klemme (10) eingesetzt wurde.

## Revendications

1. Support de gicleur à pince (1), qui permet la fixation du manchon de gicleur (S), qui est la partie d'extrémité du tuyau de gicleur dans les systèmes de gicleurs qui sont utilisés comme systèmes d'extinction d'incendie, sur les profilés (P) formés sur le plafond,
comprenant ;
• une pince inférieure (10) qui constitue la structure générale dudit support de gicleur à pince (1) et qui, une fois installée, est fixée en étant raccordée au profilé (P),
• une fente profilée (11), dans laquelle ledit profilé (P) est inséré dans ladite pince inférieure (10),
• une pince supérieure (20), qui est utilisée comme la partie correspondante de ladite pince inférieure (10) et qui constitue également la structure générale dudit support de gicleur à pince (1),
• une fente de manchon (50), qui est formée au milieu de la pince inférieure (10) et de la pince supérieure (20) lorsqu'elles sont superposées l'une à l'autre et dans laquelle, une fois installé, le manchon de gicleur (S) est placé,
• des interstices de manchon de pince (51), qui sont formés sur la pince inférieure (10) et la pince supérieure (20) et qui permettent à ladite fente de manchon (50) d'être formée,
• un élément de fixation (40) qui fixe ladite pince inférieure (10) et ladite pince supérieure (20) l'une à l'autre et permet ainsi à la pince supérieure (20) d'utiliser ce point de fixation comme articulation et de sorte que la pince supérieure (20) puisse être ouverte et fermée,
• un arbre de verrouillage (30) qui permet le verrouillage lorsque la pince supérieure (20) est tournée en utilisant ledit élément de fixation (40) comme articulation et est fermée sur la pince inférieure (10), **caractérisé en ce qu'**il comprend ;
• un bras de maintien (31) qui est le prolongement de l'arbre de verrouillage (30) vers l'extérieur de la pince inférieure (10) et qui permet d'exécuter l'étape de verrouillage par la rotation de l'arbre de verrouillage (30) sur son propre axe.

2. Support de gicleur à pince (1) selon la revendication 1, **caractérisé en ce qu'il comprend** ; une fente d'arbre de verrouillage (21) où ladite pince supérieure (20) est raccordée audit arbre de verrouillage (30).

3. Support de gicleur à pince (1) selon la revendication 1, **caractérisé en ce qu'il comprend** ; un anneau d'arbre (32), qui empêche le retrait involontaire dudit arbre de verrouillage (30) de la pince inférieure (10), une fois que ledit arbre de verrouillage (30) est inséré dans la pince inférieure (10).
